# EUROPEAN PATENT APPLICATION

(11) **EP 2 339 806 A1**
(43) Date of publication of application: **29.06.2011**
(21) Application number: 09814026.2
(22) Date of filing: 02.09.2009
(51) Int. Cl.: H04L 29/06

(54) **METHOD AND SYSTEM FOR ENB RESOURCE AUDITING**

(30) Priority: 19.09.2008 CN 200810149057
(71) Applicant: ZTE Corporation, Shenzhen, Guangdong 518057 (CN)
(72) Inventor: ZHANG, Xianzhou, Shenzhen Guangdong 518057 (CN); LIU, Lin, Shenzhen Guangdong 518057 (CN)
(74) Representative: Lampis, Marco
(86) International application number: PCT/CN2009/073710
(87) International publication number: WO 2010/031306

(57) **Abstract**

The present invention discloses a method and system for auditing resources of eNBs applied to a communication system comprising a first eNB and a second eNB, wherein the first eNB and the second eNB have an adjacent relationship and communicate with each other through an X2 interface, and the method comprises: the first eNB triggering a resource audit process, and sending a resource audit request message to the second eNB; the first eNB receiving a resource audit response message, which is sent by the second eNB in response to the resource audit request message, and obtaining first resource information of the first eNB from the resource audit response message; and the first eNB auditing resources based on the obtained first resource information and second resource information locally stored. The present invention ensures consistence of the resources between the eNBs.

## Description

### Technical Field

The present invention relates to the communication field, and more particularly, to a method and system for auditing resources of evolved node Bs (eNode B, eNB for short).

### Background of the Related Art

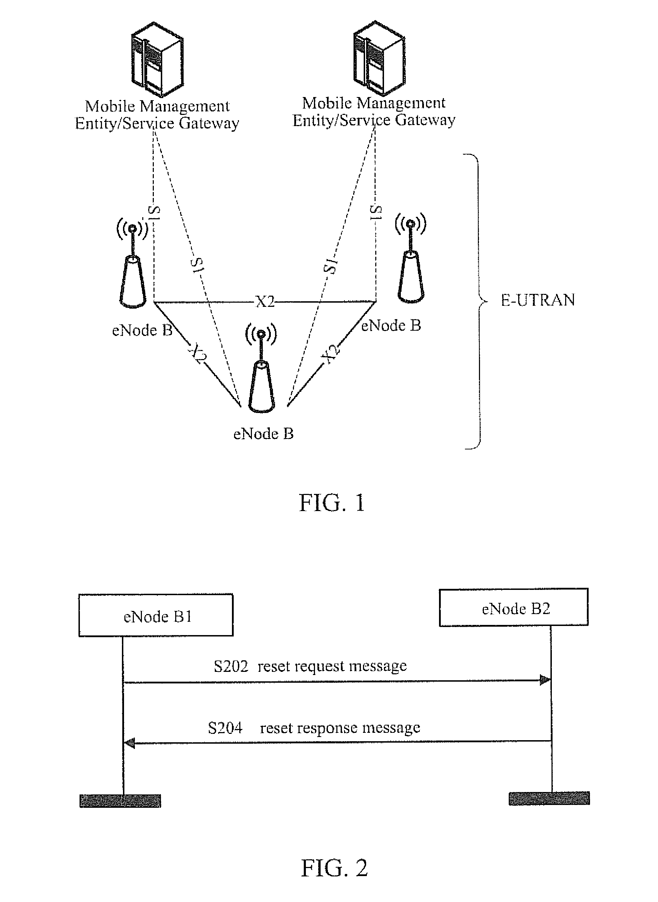

FIG. 1 is a structure diagram of a Long Term Evolution (LTE) communication system according to the related technique. As shown in FIG. 1, the LTE mobile communication system is comprised of an access network and a core network. The core network includes a Mobile Management Entity (MME)/Service Gateway (S-GW) device, and the access network includes eNB devices. For example, an eNB relegated to the Evolved Universal Mobile Telecommunications System (UMTS) Terrestrial Radio Access Network (E-UTRAN) communicates with another eNB through an X2 interface, and the eNB connects with the MME/S-GW in the core network through an S1 interface and communicates with a UE through i a Uu interface, wherein the X2 interface is an interface between eNBs for exchanging information between the eNBs.

In order to achieve switching between the eNBs and implement functions, such as load balancing, an eNB is required to store cell information of its adjacent eNBs and ensure that the resource information in different eNBs is consistent. At present, after the eNBs are powered on, they will send resetting messages to each other to implement initial uniformization of resources, and exchange cell and other information through an X2 setup message. If the resources on an eNB have altered, i.e., the resources are added, modified or deleted, the eNB will inform the other eNBs to update their own resource information by an eNB configuration update message so as to achieve increment resource uniformization.

FIG. 2 is a signaling flow chart of an eNB resetting process according to the related technique. As shown in FIG. 2, the eNB resetting process includes the following steps:
Step S202, eNBs are powered on and set up low-level communication, and the eNode B1 (eNB1) sends an X2 reset request message to the eNode B2 (eNB2); and
Step S204, the eNB2 receives the X2 reset request message of the eNB1, deletes all the resource information associated with the eNB1, and sends an X2 reset response message to the eNB1.

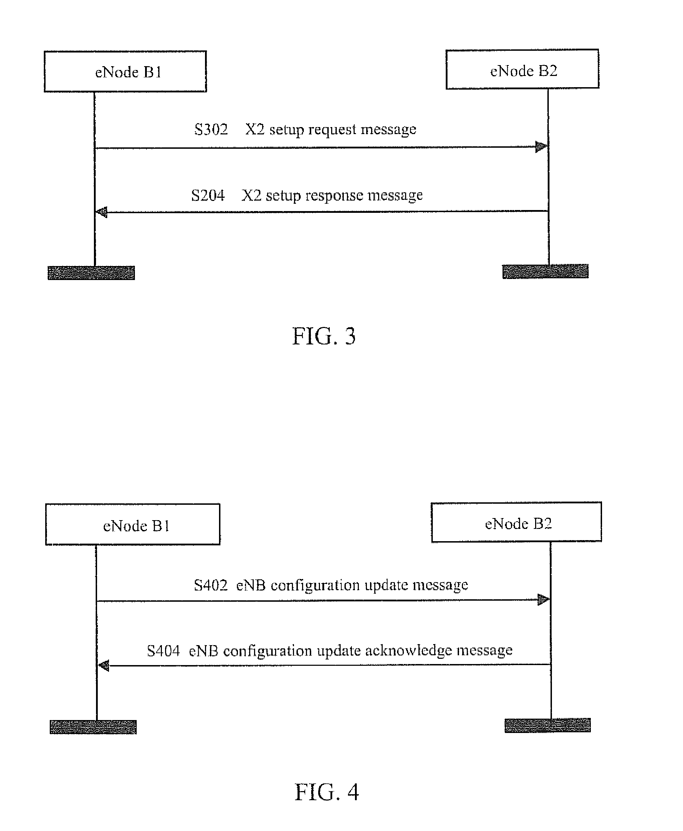

FIG. 3 is a signaling flow chart of an X2 setup process according to the related technique. As shown in FIG. 3, the X2 setup process includes the following steps:
Step S302, the eNB1 sends an X2 setup request message to the eNB2; and
Step S304, the eNB2 receives the X2 setup request message, sets up resource information of the eNB1 based on contents of the message, and sends an X2 setup response message to the eNB1; and afterwards, after receiving the X2 setup response message, the eNB1 sets up resource information of the eNB2 locally.

FIG. 4 is a signaling flow chart of an eNB configuration update process according to the related technique. As shown in FIG. 4, the eNB configuration update process includes the following steps:
Step S402, deletion, setup and modification of resources usually occur during operation of the eNB, for example, when the eNB1 deletes a cell, it will send an eNB configuration update request message to the eNB2; and
Step S404, after receiving the eNB configuration update request message, the eNB2 updates resources and sends an eNB configuration update acknowledge message to the eNB1.

It can be seen from the above processes that the cell information on the eNB is constantly changed, and the adjacent eNBs are required to exchange the cell information (delete cell resources, setup cell resources, modify cell resources) with each other. At present, resource information can be exchanged only through the X2 setup process when the eNB is powered on or trough the eNB configuration update process when resources of the eNB are changed, thus, the case where resources of the adjacent eNBs are inconsistent possibly occurs, further resulting in phenomena, such as handoff failure, resource suspension, etc.

### Content of the Invention

In order to solve the case where presently resources between adjacent eNBs are inconsistent, which possibly occurs and further results in phenomena, such as handoff failure, resource suspension, etc., the present invention is put forward. To this end, the present invention is intended to provide a method and system for auditing resources of eNBs.

In order to achieve the above intention, according to one aspect of the present invention, a method for auditing resources of eNBs is provided.

The method for auditing the resources of the eNBs in accordance with the present invention is applied to a communication system comprising a first eNB and a second eNB, wherein the first eNB and the second eNB have an adjacent relationship and communicate with each other through an X2 interface, and the method comprises: the first eNB triggering a resource audit process, and sending a resource audit request message to the second eNB; the first eNB receiving a resource audit response message, which is sent by the second eNB in response to the resource audit request message, and obtaining first resource information of the first eNB from the resource audit response message; and the first eNB auditing resources based on the obtained first resource information and second resource information locally stored.

Preferably, the first eNB triggers the resource audit process by one of: periodically triggering the resource audit process; triggering the resource audit process in response to a triggering message from the second eNB.

Preferably, after the first eNB sends the resource audit request message to the second eNB, the method further comprises: the second eNB locally reading resources of the first eNB to obtain the first resource information in response to the resource audit request message; and the second eNB sending the first resource information to the first eNB by the resource audit response message.

Preferably, the first resource information of the first eNB comprises at least one of following information: cell identities of the first eNB and the number of cells of the first eNB.

Preferably, the first eNB auditing the resources specifically comprising: the first eNB comparing the first resource information with the second resource information; and in the case where the first resource information is inconsistent with the second resource information, the first eNB triggering a resource update process based on the comparing result.

Preferably, the first eNB triggering the resource update process based on the comparing result specifically comprises: the first eNB writing resources which exist in the second resource information but not in the first resource information into an addition portion of a configuration update message; and/or the first eNB writing resources which exist in the first resource information but not in the second resource information into a deletion portion of the configuration update message; and/or the first eNB writing resources which exist in both the first resource information and the second resource information and have the same index into a modification part of the configuration update message, contents corresponding to the index in the first resource information and the second resource information being different; and the first eNB sending the configuration update message to the second eNB to perform the resource update process.

Preferably, the resource audit request message and the resource audit response message further contain a first eNB identity corresponding to the first eNB and a second eNB identity corresponding to the second eNB.

In order to achieve the above intention, according to another aspect of the present invention, a system for auditing resources of eNBa is provided.

The system for auditing the resources of the eNBs in accordance with the present invention comprises a first eNB and a second eNB, wherein the first eNB and the second eNB have an adjacent relationship and communicate with each other through an X2 interface, and the system comprises: a triggering module located in the first eNB for triggering a resource audit process; a first sending module located in the first eNB for sending a resource audit request message to the second end3; a first receiving module located in the first eNB for receiving a resource audit response message, which is sent by the second eNB in response to the resource audit request message; an obtaining module located in the first eNB for obtaining first resource information of the first eNB from the resource audit response message received by the receiving modules; and an auditing module located in the first eNB for auditing resources based on the first resource information obtained by the obtaining module and second resource information locally stored at the first eNB.

Preferably, the system further comprises: a second receiving module located in the second eNB for receiving the resource audit request message from the first eNB; a reading module located in the second eNB for reading resources of the first eNB locally al the second eNB to obtain the first resource information in response to the resource audit request message; and a second sending module located in the second eNB for sending the first resource information, to the first eNB by the resource audit response message.

Preferably, the auditing module specifically comprises: a comparing sub-module for comparing the first resource information with the second resource information; and a triggering sub-module for triggering a resource update process based the comparing result in the case where the first resource information is inconsistent with the second resource information.

The present invention adds a resource audit process between eNBs to audit resources between the eNBs by sending messages containing resource information so as to solve the case where presently resources between adjacent eNBs are inconsistent, which possibly occurs and further results in phenomena, such as handoff failure, resource suspension, etc., thereby ensuring consistence of the resources between the eNBs.

### Brief Description of Drawings

The figures described herein are used to provide a further understanding of the present invention and form a part of the present application, and exemplary embodiments in accordance with the present invention and their description are intended to explain the present invention and not to limit the present invention inappropriately. In the figures:
FIG. 1 is a structure diagram of a LTE communication system according to the related technique;
FIG. 2 is a signaling flow chart of an eNB resetting process according to the related technique;
FIG. 3 is a signaling flow chart of an X2 setup process according to the related technique;
FIG. 4 is a signaling flow chart of an eNB configuration update process according to the related technique;
FIG. 5 is a flow chart, of a method for auditing resources of eNBs according to an embodiment of the present invention;
FIG. 6 is a signaling flow chart of a method for auditing resources of eNBs according to an embodiment of the present invention;
FIG. 7 is a block diagram of a structure of a system for auditing resources of eNBs according to an embodiment of the present invention;
FIG. 8 is a block diagram of a preferable structure of a system for auditing resources of eNBs according to an embodiment of the present invention.

### Preferred Embodiments of the Present Invention

### Function Outline

In conclusion, the present invention provides a method and system for auditing resources of eNBs to trigger a resource audit process in a periodic triggering or event triggering mode. The first eNode B (eNB1) and the second eNode B (eNB2) are configured in an adjacent relationship, the eNB1 sends a resource audit request to the eNB2 through an X2 interface, and the eNB2 returns a resource audit response message to the eNB1 through the X2 interface, and after receiving the resource audit response message, the eNB1 compares resource information in the response message with local resource information, and initiates a resource uniformization process based on the comparing result. The present invention will be described in detail with reference to the accompanying drawings and in conjunction with embodiments below.

### An embodiment of a method

According to an embodiment of the present invention, a method for auditing resources of ends, which is applied to the communication system comprising the eNB1 and eNB2, is provided, wherein the eNB1 and eNB2 have an adjacent relationship and communicate with each other through the X2 interface.

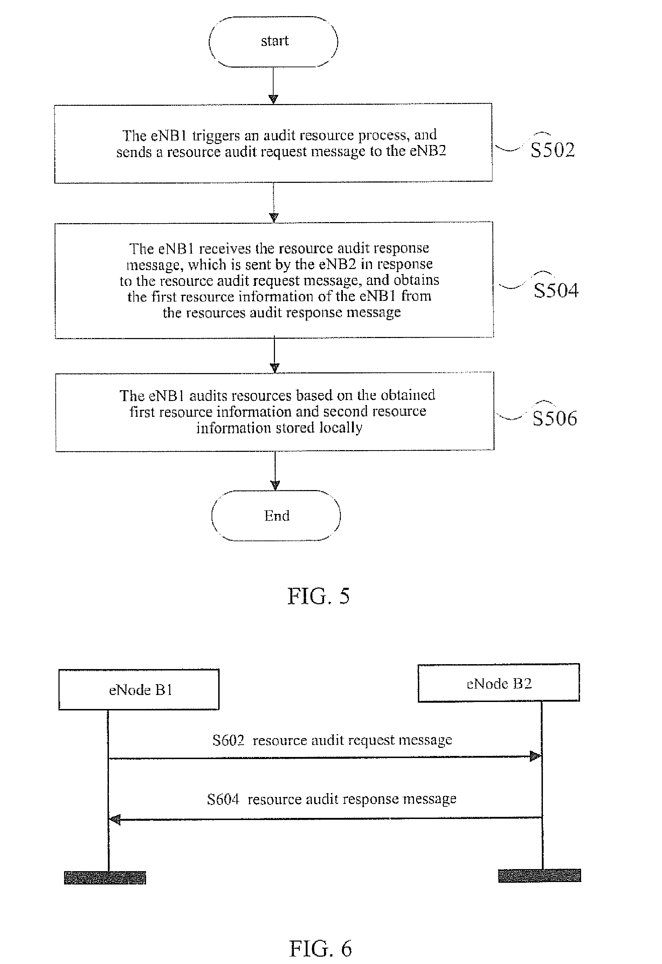

FIG. 5 is a flow chart of a method for auditing resources of eNBs according to the embodiment of the present invention, and FIG. 6 is a signaling flow chart of the method for auditing resources of the eNB according to the embodiment of the present invention. As shown in FIG. 5 and FIG. 6, this method comprises the follow steps:
Step S502, the eNB1 triggers a resource audit process, and sends a resource audit request message to the eNB2 (i.e., step S602); wherein the eNB1 triggers the resource audit process by one of: periodically triggering the audit process and triggering the audit process in response to a triggering message from the eNB2;
Step S504, the eNB1 receives a resource audit response message, which is sent by the eNB2 in response to the resource audit request message (i.e., step S604), and obtains the first resource information of the eNB1 from the resource audit response message;
Step S506, the eNB1 audits resources based on the obtained first resource information and the second resource information stored locally.

This embodiment adds the resource audit process between the eNBs to audit resources between the eNBs by sending messages containing resource information so as to solve the case where presently resources between adjacent eNBs are inconsistent, which possibly occurs and further results in phenomena, such as handoff failure, resource suspension, etc., thereby ensuring consistence of the resources between the eNBs.

The implementation process of the present invention will be described in detail in conjunction with embodiments.

Step 1, multiple eNBs are powered on and start normally, and two eNBs (i.e., eNB1 and eNB2) are configured to be adjacent.

Step 2, communication of an X2 interface is normal, and two adjacent eNBs sets up the X2 interface and start a periodicity audit timer.

Step 3, when the periodicity audit timer is started, the eNB1 fills a message number 33 into an audit request message, fills its own (i.e., the eNB1) identity (ID) into a source eNB ID field of the audit request message and fills an ID of the eNB2 into a destination eNB field of the audit request message to form a format of the audit request message as shown in table 1, and sends the audit request message to the eNB2 through the X2 interface.

**Table 1: the format of the audit request message**

| Name | Information element | Length (byte) | Value |
|---|---|---|---|
| Audit request message | Message type | 2 | 33 |
| Source eNB ID | Source eNB Id | 2 | |
| Destination eNB ID | Destination eNB Id | 2 | |

Step 4, the eNB2 receives the audit request message, reads the resources of the eNB1 locally to obtain the first resource information in response to the resource audit request message; and the eNB2 sends the first resource information to the eNB1 by a resource audit response message, wherein the resource information of the eNB1 includes at least one of the following information: cell identities of the eNB1, the number of cells of the eNB1. Specifically, the eNB2 fills a message number 34 into the audit response message, fills its own (i.e., the eNB2) ID into a source eNB ID field of the audit response message and fills the ID of the eNB1 into a destination eNB ID field of the audit response message, and fills cell IDs of the eNB1 into a cell ID field of the audit response message in sequence, and updates a cell number field in the audit response message, namely, whenever a cell ID is added in the destination cell ID field, 1 will be added in the cell number field, to form a format of the audit response message as shown in table 2, and sends the audit response message to the eNB1 through the X2 interface.

**Table 2: the format of the audit response message**

| Name | Information element | Length (byte) | Value |
|---|---|---|---|
| Audit response message | Message type | 2 | 34 |
| Source eNB ID | Source eNB Id | 2 | |
| Destination eNB ID | Destination eNB Id | 2 | |
| The number of cells | Cell Num | 1 | 0,255 |
| Cell ID | >Cell Id | | |

Step 5, the eNB1 receives the audit response message, compares the first resource information with the second resource information, and triggers the resource update process based on the comparing result in the case where the first resource information in inconsistent with the second resource information. Specifically, the eNB1 writes resources which exist in the second resource information but not in the first resource information into an addition part of a configuration update message, and/or the eNB1 writes resources which exist in the first resource information but not in the second resource information into a deletion part of the configuration update message, and/or the eNB1 writes resources which exist in both the first resource information and the second resource information and have the same index into a modification part of the configuration update message, contents corresponding to the index in the first resource information and the second resource information, being different contents corresponding to the index in the first resource information and the second resource information being different. For instance, the eNB1 writes a cell ID which exists in the second resource information but not in the first resource information into the addition part of the configuration update message, and/or the eNB1 writes a cell ID which exists in the first resource information but not in the second resource information into the deletion part of the configuration update message, and the index can be set as the cell ID. For resources which exist in both the first resource information and the second resource information and have the same the cell ID, with contents corresponding to the index in the first resource information and the second resource information being different, the eNB1 writes the resources corresponding to the cell ID in the second resource information into the modification part on the configuration update message; and the eNE1 sends an eNB configuration update message to the eNB2 through the X2 interface to perform the resource update process, namely, i.e., trigger the NodeB configuration update process such that the resources of the adjacent eNBs are consistent.

### An embodiment of a system

According to an embodiment of the present invention, there is provided a system for auditing resources of eNBs. The system comprises an eNB1 and an eNB2, wherein the eNB1 and eNB2 have an adjacent relationship and communicate with each other through an X2 interface.

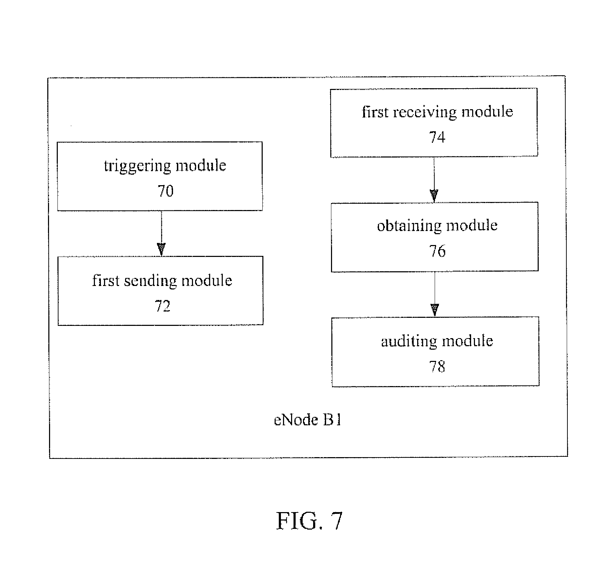

FIG. 7 is a block diagram of a structure of a system for auditing resources of eNBs according to the embodiment of the present invention. As shown in FIG. 7, this system includes a triggering module 70, a first sending module 72, a first receiving module 74, an obtaining module 76, and an auditing module 78. The structure will be described in details below.

The triggering module 70 located in the eNB1 is configured to trigger a resource audit process.

The first sending module 72 located in the eNB1 and connected to the triggering module 70 is configured to send a resource audit request messages to the cNB2.

The first receiving module 74 located in the eNB1 is configured to receive a resource audit response message, which is sent by the eNB2 in response to the resource audit request message.

The obtaining module 76 located in the eNB1 and connected to the first receiving module 74 is configured to obtain the first resource information of the eNB1 from the resource audit response message received from the first receiving module 74.

The auditing module 78 located in the eNB1 and connected to the obtaining module 76 is configured to audit resources based on the first resource information obtained from the obtaining module 76 and the second resource information stored locally.

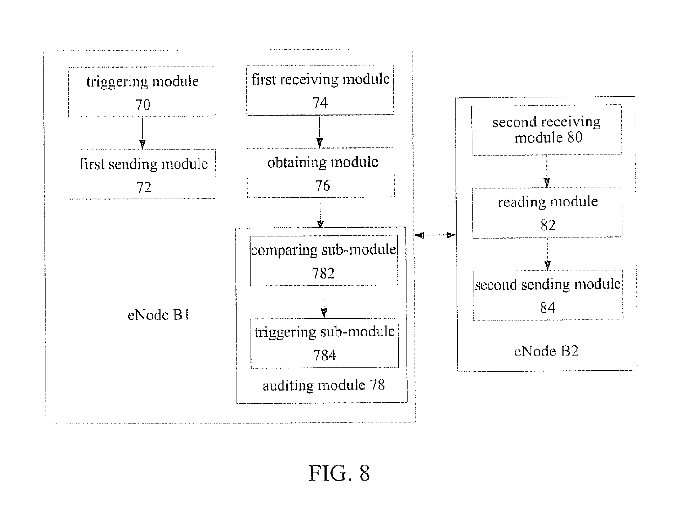

FIG. 8 is a block diagram of a preferable structure of the system for auditing resources of the eNB according to the embodiment of the present invention. As shown in FIG. 8, the system further includes: a second receiving module 80 located in the eNB2 for receiving the resource audit request message from the eNB1; a reading module 82 located in the eNB2 and connected to the second receiving module 80 for reading resources of the eNB1 locally to obtain the first resource information in response to the resource audit request message; and a second sending module 84 located in the eNB2 and connected to the reading module 82 for sending the first resource information to the eNB1 through the resource audit response message.

Preferably, the auditing module 78 specifically includes: a comparing sub-module 782 for comparing the first resource information with the second resource information; a triggering sub-module 784 connected to the comparing sub-module 782 for triggering a resource update process based on the comparing result in the case where the first resource information is inconsistent with the second resource information.

The embodiments described above in accordance with the present invention use resource audit technique to audit resources between the eNBs by sending messages containing the resource information so as to solve the case where presently resources between adjacent eNBs are inconsistent, which possibly occurs and further results in phenomena, such as handoff failure, resource suspension, etc., such that the resources of the adjacent eNBs are uniform, thereby ensuring consistence of the resources between the eNBs, achieving the effect of avoiding resource suspension, and improving the success rate of UE handoff.

Obviously, the person skilled in the art should understand that all the modules or all the steps described above of the present invention can be implemented by general-purpose computing devices, concentrated in a single computing device, or distributed in a network comprised of a plurality of computing devices. Alternatively, the modules and steps can be implemented by executable program codes of the computing devices such that they can be stored in a storage device and be executed by the computing devices, or they can be made into individual integrated circuit modules, or several modules or steps among them can be made into a single integrated circuit module. Therefore, the present invention is not limited to any particular combination of hardware and software.

The above embodiments are only preferable embodiments of the present invention and are not intended to limit the present invention. It is apparent to persons skilled in the art that various modifications and variations can be made to the present invention. Any modification, equivalent substitution and improvement made within the spirit and principle of the present invention should be included in the protection scope of the present invention.

## Claims

1. A method for auditing resources of eNBs applied to a communication system comprising a first eNB and a second eNB, wherein the first eNB and the second eNB have an adjacent relationship and communicate with each other through an X2 interface, and the method comprises:
the first cNB triggering a resource audit process, and sending a resource audit request message to the second eNB;
the first eNB receiving a resource audit response message, which is sent by the second eNB in response to the resource audit request message, and obtaining first resource information of the first eNB from the resource audit response message; and
the first eNB auditing resources based on the obtained first resource information and second resource information, locally stored.

2. The method according to claim 1, wherein the first eNB triggers the resource audit process by one of: periodically triggering the resource audit process; triggering the resource audit process in response to a triggering message from the second eNB.

3. The method according to claim 1, after the first eNB sends the resource audit request message to the second eNB, the method further comprising:
the second eNB locally reading resources of the first eNB to obtain the first resource information in response to the resource audit request message; and
the second eNB sending the first resource information to the first eNB by the resource audit response message.

4. The method according to claim 1, wherein the first resource information of the first eNB comprises at least one of following information: cell identities of the first eNB and the number of cells of the first eNB.

5. The method according to claim 1, wherein the first eNB auditing the resources specifically comprising:
the first eNB comparing the first resource information with the second resource information; and
in the case where the first resource information is inconsistent with the second resource information, the first eNB triggering a resource update process based on the comparing result.

6. The method according to claim 5, wherein the first eNB triggering the resource update process based on the comparing result specifically comprises:
the first eNB writing resources which exist in the second resource information but not in the first resource information into an addition portion of a configuration update message; and/or the first eNB writing resources which exist in the first resource information but not in the second resource information into a deletion portion of the configuration update message; and/or the first eNB writing resources which exist in both the first resource information and the second resource information and have the same index into a modification part of the configuration update message, contents corresponding to the index in the first resource information and the second resource information being different; and
the first eNB sending the configuration update message to the second eNB to perform the resource update process.

7. The method according to any one of claim 1 to 6, wherein the resource audit request message and the resource audit response message further contain a first eNB identity corresponding to the first eNB and a second eNB identity corresponding to the second eNB.

8. A system for auditing resources of eNBs, the system comprising a first eNB and a second eNB, wherein the first eNB and the second eNB have an adjacent relationship and communicate with each other through an X2 interface, and the system comprises:
a triggering module located in the first eNB for triggering a resource audit process;
a first sending module located in the first eNB for sending a resource audit request message to the second eNB;
a first receiving module located in the first eNB for receiving a resource audit response message, which is sent by the second eNB in response to the resource audit request message;
an obtaining module located in the first eNB for obtaining first resource information of the first eNB from the resource audit response message received by the receiving module; and
an auditing module located in the first eNB for auditing resources based on the first resource information obtained by the obtaining nodule and second resource information locally stored at the first eNB.

9. The system according to claim 8, further comprising:
a second receiving module located in the second eNB for receiving the resource audit request message from the first eNB;
a reading module located in the second eNB for reading resources of the first eNB locally at the second eNB to obtain the first resource information in response to the resource audit request message; and
a second sending module located in the second eNB for sending the first resource information to the first eNB by the resource audit response message.

10. The system according to claim 8, wherein the auditing module specifically comprises:
a comparing sub-module for comparing the first resource information with the second resource information; and
a triggering sub-module for triggering a resource update process based the comparing result in the case where the first resource information is inconsistent with the second resource information.
